(19) Europäisches Patentamt

European Patent Office

Office européen des brevets

(11) **EP 0 956 639 B1**

(12) **EUROPÄISCHE PATENTSCHRIFT**

(45) Veröffentlichungstag und Bekanntmachung des Hinweises auf die Patenterteilung:
**20.06.2001 Patentblatt 2001/25**

(51) Int Cl.$^7$: **H02M 7/219**, H02M 5/458

(21) Anmeldenummer: **98906825.9**

(86) Internationale Anmeldenummer:
**PCT/DE98/00165**

(22) Anmeldetag: **20.01.1998**

(87) Internationale Veröffentlichungsnummer:
**WO 98/34335 (06.08.1998 Gazette 1998/31)**

(54) **REGELUNGSANORDNUNG ZUR EIN-/RÜCKSPEISUNG VON ENERGIE AUS EINEM DREHSTROMNETZ IN EINEM UMRICHTER MIT SPANNUNGSZWISCHENKREIS**

CONTROL SYSTEM FOR SUPPLY / RECOVERY OF ENERGY FROM A THREE-PHASE NETWORK INTO A CONVERTER WITH A VARIABLE VOLTAGE LINK

DISPOSITIF DE REGULATION POUR ALIMENTATION/RECUPERATION D'ENERGIE A PARTIR D'UN RESEAU TRIPHASE DANS UN CONVERTISSEUR A CIRCUIT INTERMEDIAIRE DE TENSION

(84) Benannte Vertragsstaaten:
**AT CH DE ES FR GB IT LI SE**

(30) Priorität: **31.01.1997 DE 19703659**

(43) Veröffentlichungstag der Anmeldung:
**17.11.1999 Patentblatt 1999/46**

(73) Patentinhaber: **SIEMENS AKTIENGESELLSCHAFT**
**80333 München (DE)**

(72) Erfinder: **GÖPFRICH, Kurt**
**D-91058 Erlangen (DE)**

(56) Entgegenhaltungen:
**US-A- 5 034 874**

• **YOUICHI ITOH ET AL: "EASY DIGITAL CONTROL OF THREE-PHASE PWM CONVERTER" PROCEEDINGS OF THE INTERNATIONAL TELECOMMUNICATIONS ENERGY CONFEREN (INTELEC), KYOTO, NOV. 5 - 8, 1991, Nr. CONF. 13, 5.November 1991, INSTITUTE OF ELECTRICAL AND ELECTRONICS ENGINEERS, Seiten 727-734, XP000314657**

## Beschreibung

Die Erfindung betrifft eine Regelungsanordnung zur Ein-/Rückspeisung von Energie aus einem Drehstromnetz in einen Umrichter mit Spannungszwischenkreis, welche bevorzugterweise als selbstgeführter Netzstromrichter eines Spannungszwischenkreis-Umrichters eingesetzt werden kann.

Es ist bekannt, daß die Stromrichterventile eines an ein dreiphasiges Drehstromnetz angeschlossenen Stromrichters mit Ansteuersignalen angesteuert werden, die unter Verwendung eines Phasenregelkreises auf die Phasenlage des Spannungssystemes des Netzes synchronisiert sind. Dieser bekannte Phasenregelkreis geht davon aus, daß ein dreiphasiges Drehstromsystem durch die orthogonalen Komponenten eines Vektors in einem geeigneten Koordinatensystem dargestellt werden kann. Dabei werden Istwerte des Drehstromsystemes mittels eines Vektordrehers in die Komponenten des Spannungsvektors in einem rotierenden Koordinatensystem transformiert. Die Transformationselemente dieser Vektortransformation werden dadurch gewonnen, daß die mittlere Winkelabweichung des transformierten Vektors von einer im rotierenden Koordinatensystem fest vorgegebenen Richtung einem Winkelregler zugeführt wird. Dessen Ausgangssignal bestimmt die Frequenz des rotierenden Koordinatensystemes und steuert die Frequenz von Oszillatoren, deren Ausgangssignale einerseits die als Transformationselemente benötigten Winkelfunktionen des Transformationswinkels, andererseits aber auch die Phasenlage der auf die Netzwechselspannung synchronisierten Referenzspannungen liefert.

Für den stabilen Betrieb am Drehstromnetz müssen beim selbstgeführten Netzstromrichter eines Umrichters mit Spannungszwischenkreis die aus dem Netz genommenen Massenströme $i_u$, $i_v$, $i_w$ geregelt werden. Meist soll dem Netz keine oder eine vorgegebene Blindleistung entnommen werden, so daß die Phasenlage der Ströme zu den Netzspannungen fest vorgegeben werden muß. Die Amplitude der Phasenströme dagegen ergibt sich als Funktion der zu übertragenden Wirkleistung und Blindleistung. Es ist somit erforderlich, die Ansteuersignale für die Stromrichterventile auf die Netzspannung zu synchronisieren. Dies kann durch das im vorangehenden geschilderte Vektorfilter geschehen, was jedoch einen hohen Aufwand an Bauteilen und damit verbundene Kosten mit sich bringt. Darüber hinaus tritt bei Netzschwankungen aufgrund der endlichen Dynamik des Winkelregelkreises ein Fehlwinkel zwischen den Phasenspannungen und Referenzspannungen auf.

Problematisch sind auch die durch Stromrichter verursachten Netzrückwirkungen auf das Drehstromnetz. Bei einer Einspeisung bzw. Rückspeisung von Energie aus dem Drehstromnetz in einen Spannungszwischenkreis mit Hilfe von blockförmigen Phasenströmen treten Oberwellen (5., 7., 9. usw. Harmonische der Netzfrequenz) auf. Solche Netzrückwirkungen sind jedoch unter Gesichtspunkten der elektromagnetischen Verträglichkeit unerwünscht.

Um solche Netzrückwirkungen zu minimieren, ist ein Stromrichter bekannt, der mittels eines Phasenreglers ein zu einer verketteten Spannung synchronisiertes analoges Winkelsignal bildet, um Funktionsspeicher zur Bildung von digitalen Winkelfunktionswerten zu adressieren. Ein Gleichspannungsregler liefert den Sollwert für die Amplitude des dem Wechselspannungsnetz zu entnehmenden Systemes der Wechselströme. Durch Multiplikation der digitalen Winkelfunktionswerte mit der Sollamplitude liefern Digital/Analog-Umsetzer ein System von Phasenstrom-Sollwerten, das mit entsprechenden Stromistwerten verglichen wird. Die Vergleichsergebnisse dienen zur Ansteuerung von unterlagerten Stromreglern, deren Ausgangssignale Ansteuersignale für die Ventile des Stromrichters (z.B. Transistoren) liefern.

Ein solches Regelungskonzept besitzt jedoch den Nachteil, das es nicht robust gegen den Ausfall einer Phase des Drehstromnetzes ist, da die Regelung in einem solchen Fall in Mitkopplung geht, wodurch die als Stromrichterventile fungierenden Transistoren zerstört werden.

Aufgabe der vorliegenden Erfindung ist es daher, eine Regelungsanordnung zu schaffen, durch die die Stromrichterventile eines Umrichters mit Spannungszwischenkreis so angesteuert werden können, daß die Phasenströme synchron zu der Spannung des Drehstromnetzes sind (d.h. mit einer Phasenverschiebung von 0 oder einer anderen, vorgegebenen Phasenverschiebung), durch die Netzrückwirkungen in das Drehstromnetz insbesondere durch Oberwellen minimiert werden kann und durch die darüber hinaus verhindert werden kann, daß die Regelung bei Ausfall einer Phase in Mitkopplung geht. Dadurch soll die Robustheit der Ein-/Rückspeiseeinheit gegenüber bisher bekannten Lösungen erhöht werden.

Gemäß der vorliegenden Erfindung wird dieser Aufgabe durch eine Regelungsanordnung zur Ein-/Rückspeisung von Energie aus einem Drehstromnetz in einen Umrichter mit Spannungszwischenkreis mit den folgenden Merkmalen gelöst:

1.1 ein Phasendetektor, welcher für jede Phase das aktuelle Vorzeichen der entsprechenden Phase als digitales Signal bereitstellt,

1.2 ein Phasenregelkreis zur Erzeugung eines auf die erfaßte Phasenlage synchronisierten binären Adressignales, welcher von einem der das aktuelle Vorzeichen der entsprechenden Phase bereitstellenden digitalen Signale ansteuerbar ist,

1.3 einem Funktionsspeicherglied, welches durch das binäre Adressignal ansteuerbar ist, zur Erzeugung von mindestens zwei phasenrichtigen digitalen voneinander phasenverschobenen Winkelfunktionswerten sowie von dazugehörigen das jeweilige Vorzeichen der Winkelfunktionswerte darstellenden digitalen Signalen,

1.4 mindestens zwei Digital/Analog-Umsetzerstufen, welche eingangsseitig mit den jeweiligen digitalen Winkelfunktionswerten beaufschlagbar sind,

1.5 mindestens zwei Multiplikatorstufen, durch welche die eingangsseitig anstehenden analogen Winkelwerte mit einem vorgebbaren Stromsollwert gewichtbar sind, zur Erzeugung eines Systems von phasenrichtigen analogen, gegeneinander phasenverschobenen Wechselstromsollwerten gleicher Amplitude,

1.6 einer Regelvergleichstufe, welcher das analoge Wechselstromsollwert-System und ein durch Wechselstrommeßglieder erfaßbares analoges Wechselstromistwert-System zur Bildung von phasenbezogenen Differenzwerten zuführbar ist, zur Erzeugung eines analogen Referenzsignales für jede Phase aus dem jeweils zugehörigen Differenzwert,

1.7 für jede Phase ein durch das jeweilige Referenzsignal dieser Phase ansteuerbarer Stromregler zur Erzeugung von jeweiligen Ansteuerimpulsen für an die entsprechende Phase des wechselstromseitigen Anschlusses angeschlossene Stromrichterventile,

1.8 einer Vergleicherstufe zur Erzeugung eines Sperrsignales zum Sperren der Ansteuerimpulse für die Stromrichterventile für den Fall, daß mindestens ein vom Phasendetektor bereitgestelltes, das aktuelle Vorzeichen einer Phase darstellendes digitales Signal von dem entsprechenden vom Funktionsspeicherglied bereitgestellten das jeweilige Vorzeichen der Winkelfunktionswerte darstellenden digitalen Signal abweicht.

Die mit einer Regelungsanordnung gemäß der vorliegenden Erfindung erzielbaren Vorteile bestehen insbesondere darin, das eine Synchronität zwischen den Phasenströmen und der Spannung des Drehstromnetzes erzielt wird, daß der Oberwellenanteil bei der Ein-/Rückspeisung von Energie aus dem Drehstromnetz in den Spannungszwischenkreis minimiert wird und daß die Regelungsanordnung robust gegenüber dem Ausfall mindestens einer Phase des Drehstromnetzes ist.

In einer ersten vorteilhaften Ausgestaltung der Regelungsanordnung gemäß der vorliegenden Erfindung wird die Anordnung um einen vorteilhaften Spannungsregler ergänzt. Dies geschieht durch folgendes weiteres Merkmal:

2.1 ein mit einer Differenz aus einem vorgegebenen Spannungssollwert und einem rückgeführten Spannungsistwert beaufschlagbarer Spannungsregler zur Erzeugung des Stromsollwertes, wobei der Spannungsregler als proportionaler Regler mit integralem Verhalten ausgelegt ist.

In einer weiteren vorteilhaften Ausgestaltung der Regelungsanordnung gemäß der vorliegenden Erfindung wird ein besonders vorteilhafter unterlagerter Stromregler zur Ansteuerung der Stromrichterventile geschaffen. Dadurch können darüber hinaus die Schaltverluste minimiert werden. Dies geschieht durch folgendes weiteres Merkmal:

3.1 jeder Stromregler für jede Phase ist als Hystereseregler mit vorgebbarer, endlicher Hysteresebreite ausgelegt.

In einer alternativen vorteilhaften Ausgestaltung der vorliegenden Erfindung wird eine weitere Möglichkeit zur Optimierung des unterlagerten Stromreglers geschaffen. Dies geschieht durch folgendes weiteres Merkmal:

4.1 jeder Stromregler für jede Phase ist als Pulsweitenmodulationsregler mit vorgebbarer konstanter Frequenz ausgelegt.

In einer weiteren vorteilhaften Ausgestaltung der Regelungsanordnung gemäß der vorliegenden Erfindung wird der Aufwand an Bauelementen innerhalb der Regelungsanordnung weiter minimiert, indem das Funktionsspeicherglied, die Digital/Analog-Umsetzerstufen sowie die Multiplikatorstufen lediglich für zwei Phasen des Drehstromnetzes ausgelegt werden müssen. Dies geschieht durch folgendes weiteres Merkmal:

5.1 einem Rechenmittel (R) zur Erzeugung eines dritten phasenrichtigen Wechselstromsollwertes aus lediglich zweien von den über das Funktionsspeicherglied, die Digital/Analog-Umsetzerstufen und die Multiplikatorstufen bereitgestellten phasenrichtigen analogen, gegeneinander phasenverschobenen Wechselstromsollwerten gleicher Amplitude.

In einer weiteren vorteilhaften Ausgestaltung der Regelungsanordnung gemäß der vorliegenden Erfindung wird erreicht, daß ein vorgebbarer Toleranzbereich für Phasenschwankungen vorgesehen werden kann. Somit ist es beispielsweise möglich, das eine Phasenverschiebung von 10° zulässig ist, eine darüber hinausgehende Phasenverschiebung jedoch zu einer Sperrung der Ansteuerimpulse für die Stromrichterventile führt. Dies wird durch folgendes weiteres Merkmal erreicht:

6.1 einem Impulsverlängerungsglied mit vorgebbarer Verlängerungszeit zur Verlängerung des Sperrsignales.

In einer weiteren vorteilhaften Ausgestaltung der Regelungsanordnung gemäß der vorliegenden Erfindung wird darüber hinaus erreicht, das Änderungen der Phasenreihenfolge erkannt werden können. Dies geschieht durch folgendes weiteres Merkmal:

7.1 es sind Winkelfunktionswerte sowie das jeweilige Vorzeichen der Winkelfunktionswerte darstellende digitale Signale für mehrere Zuordnungen zur Phasenlage des Drehstromnetzes in dem Funktionsspeicherglied hinterlegt, wobei der entsprechende Speicherbereich für jede Zuordnung über das Adressignal entsprechend einer Rechts/Linksdrehfelderkennung einstellbar ist.

Weitere Einzelheiten und Vorteile der vorliegenden Erfindung ergeben sich anhand der folgenden Darstellung eines Ausführungsbeispieles und im Zusammenhang mit der Figur. Es zeigt:

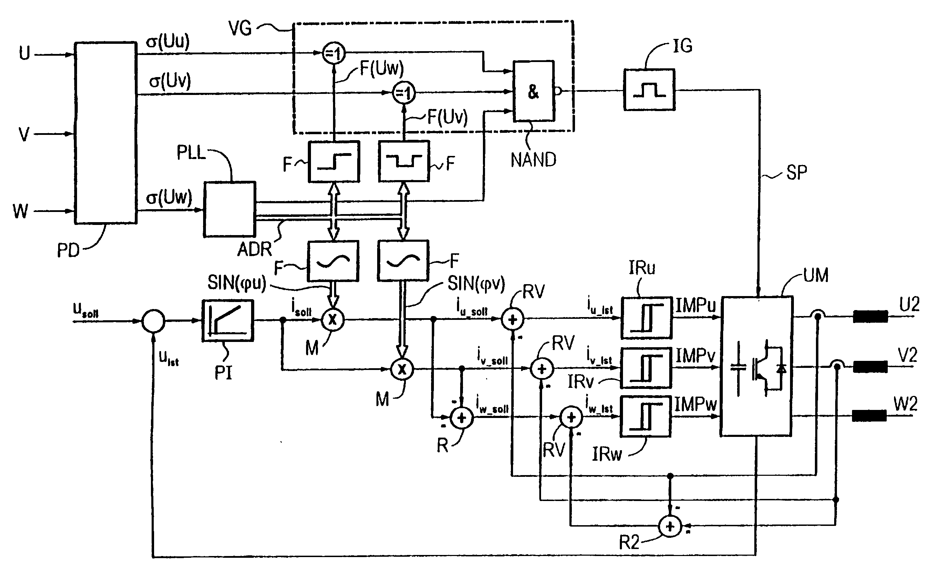

FIG 1     ein Blockschaltbild einer Regelungsanordnung zur sinusförmigen Ein-/Rückspeisung von Energie aus einem Drehstromnetz in einen Umrichter mit Spannungszwischenkreis, welche eine Synchronität zwischen den Phasenströmen und der Spannung des Drehstromnetzes ermöglicht und die robust gegen den Ausfall mindestens einer Netzphase ist.

In der Darstellung gemäß FIG 1 ist eine Regelungsanordnung gemäß der vorliegenden Erfindung am Beispiel einer sinusförmigen Ein-/Rückspeisung von Energie aus einem der besseren Übersichtlichkeit nicht gezeigten Drehstromnetz mit den Phasen U, W, V in einen Umrichter UM mit einem Spannungszwischenkreis gezeigt. Im allgemeinen ist man bestrebt, das Drehstromnetz symmetrisch zu belasten, was bedeutet, daß den Phasen U, W, V am wechselspannungsseitigen Anschluß des Stromrichters Ströme entnommen werden, die einem symmetrischen System von Stromsollwerten $i_{u\_soll}$, $i_{w\_soll}$, $i_{v\_soll}$ entsprechen. Das System dieser genannten symmetrischen Wechselstrom-Sollwerte kann durch einen Amplituden-Sollwert $i_{soll}$ und einen entsprechenden Phasenwinkel beschrieben werden, aus denen jeweils die drei genannten Wechselstrom-Sollwerte als 120° gegeneinander phasenverschobene Signale mit einer gemeinsamen, zu $i_{soll}$ proportionalen Amplitude hervorgehen.

Mittels eines Phasendetektors PD wird jeweils der Nulldurchgang oder ein anderer vorgegebener fester Phasenwinkel für jede der einzelnen Netzphasen U, W, V erfaßt. Die Phasenverschiebung gegenüber dem Drehstromnetz kann beliebig sein, muß jedoch definiert sein. Daher muß ein solcher Phasenwinkel fest vorgegeben sein. Daraus wird über den Phasendetektor PD für jede der Netzphasen ein digitales Signal σ(Uu), σ(Uv), σ(Uw) abgeleitet, durch welches jeweils das Vorzeichen der entsprechenden Netzphase U, W, V in digitaler Form gekennzeichnet wird.

Mit einem beliebigen dieser genannten digitalen Signale wird ein Phasenregelkreis PLL ("Phase locked loop") angesteuert, welcher ausgangsseitig auf die erfaßte Phasenlage synchronisierte binäre Adressignale ADR bereitstellt.

Mittels dieses binären Adressignales ADR werden ein oder als Alternative auch mehrere Funktionsspeicherglieder F angesteuert, welche mindestens zwei phasenrichtige digitale, gegeneinander äquidistant phasenverschobene Winkelfunktionswerte ausgeben. Dabei ist es für die Erfindung unerheblich, ob diese mindestens zwei Winkelfunktionswerte in einem einzigen oder aber separat dafür vorgesehenen Funktionsspeichergliedern f abgelegt sind. Im vorliegenden Ausführungsbeispiel ist eine Regelungsanordnung zur sinusförmigen Ein-/Rückspeisung von Energie aus einen Drehstromnetz gezeigt, weshalb die in dem oder den Funktionsspeichergliedern F abgelegten phasenrichtigen digitalen Winkelfunktionswerte einen sinusförmigen Verlauf SIN(φu), SIN(φv) beschreiben. Es besteht die Möglichkeit, für alle drei Phasen U, W, V separate - im Ausführungsbeispiel sinusförmige - Winkelfunktionswerte zu hinterlegen. Wie im weiteren geschildert wird, ist es jedoch besonders vorteilhaft, lediglich solche Winkelfunktionswerte für diejenigen Netzphasen - im Ausführungsbeispiel die Phasen U und V - zu hinterlegen, welche nicht zur Ansteuerung des Phasenregelkreises PLL verwendet werden (im vorliegenden Ausführungsbeispiel ist dies die Netzphase W).

Neben den bereits erwähnten Winkelfunktionswerten für mindestens zwei Netzphasen U, V ist in dem oder den Funktionsspeichergliedern F zusätzlich auch der Verlauf des zu den Winkelfunktionswerten zugehörigen jeweiligen Vorzeichens der Winkelfunktionswerte in Form von digitalen Signalen F(Uu) und F(Uv) hinterlegt, so daß der oder die Funktionsspeicherglieder F zu jedem für die entsprechende Netzphase bereitgestellten Winkelfunktionswert separat auch das jeweilige Vorzeichen der Winkelfunktionswerte bereitstellen. Die bereitgestellten Vorzeichenwerte F(Uu), F(Uv) besitzen dabei beispielsweise die gleiche Form von digitalen Signalen wie die vom Phasendetektor PD bereitgestellten digitalen Vorzeichensignale σ(Uu), σ(Uv) und σ(Uw).

In der Darstellung gemäß FIG 1 der besseren Übersichtlichkeit halber nicht dargestellte Digital/Analog-Umsetzerstufen setzen die diesen eingangsseitig zugeleiteten jeweiligen digitalen Winkelfunktionswerte SIN(φu), SIN(φv) in entsprechende analoge gegeneinander äquidistant phasenverscbobene Signale um. Diese analogen gegeneinander äquidistant phasenverschobene Werte werden mindestens zwei Multiplikatorstufen M zugeleitet, durch welche die anstehenden analogen Winkelwerte mit einem vorgebbaren Stromsollwert $i_{soll}$ gewichtet werden.

Dieser Stromsollwert $i_{soll}$ kann beispielsweise ausgangsseitig durch einen Spannungsregler PI bereitgestellt werden, welcher durch die Differenz aus einem vorgebbaren Spannungssollwert $u_{soll}$ und einen rückgeführten Spannungsistwert $u_{ist}$ beaufschlagbar ist. Dieser Spannungsregler PI ist bevorzugterweise als proportionaler Regler mit integralem Verhalten ausgelegt.

Die Ausgangssignale der mindestens zwei Multiplikatorstufen M stellen dann direkt die analogen Wechselstrom-Sollwerte dar. Für den Fall, daß in dem oder den Funktionsspeichergliedern F für alle drei Phasen phasenrichtige digitale voneinander äquidistant phasenverschobene Winkelfunktionswerte hinterlegt sind, sind entsprechend drei Digital-Analog-Umsetzerstufen soei drei Multiplikatorstufen M notwendig, so daß ausgangsseitig bereits alle drei analogen Wechselstrom-Sollwerte $i_{\_soll}$, $i_{\_vsoll}$ und $i_{\_wsoll}$ bereitstehen. In dem in der Darstellung gemäß FIG 1 gezeigten Ausführungsbeispiel sind jedoch - wie bereits erwähnt - lediglich die zwei nicht zur Ansteuerung des Phasenregelkreises PLL verwendeten Phasen U und V in dem oder den Funktionsspeichergliedern F hinterlegt, so daß lediglich zwei Digital-Analog-Umsetzerstufen und zwei Multiplikatorstufen M benötigt werden und gezeigt sind. In dem letzteren in der Darstellung gemäß FIG 1 gezeigten Ausführungsfall wird die Tatsache ausgenutzt, daß die algebraische Summe der Stromistwerte, die als Nullkomponente bezeichnet wird, gleich Null ist. Dieser Zusammenhang wird durch die folgende Berechnungsvorschrift verdeutlicht:

$$i_{u\_ist} + i_{v\_ist} + i_{w\_ist} = 0.$$

Damit läßt sich der Stromsollwert für die dritte, nicht in dem oder den Funktionsspeichergliedern als Winkelfunktionswerte hinterlegte Phase W durch ein Rechenglied R nach folgender Berechnungsvorschrift bestimmen:

$$i_{w\_soll} = - (i_{u\text{-}soll} + i_{v\_soll}).$$

Das Rechenglied R kann beispielsweise in Form eines Addierers oder in Form eines entsprechend programmierten Mikroprozessors ausgestaltet sein. Somit steht am Ausgang des Rechengliedes R der letzte benötigte Wechselstrom-Sollwert $i_{w\_soll}$ bereit, so daß ein System von phasenrichtigen analogen gegeneinander phasenverschobenen Wechselstromsollwerten $i_{u\_soll}$, $i_{v\_soll}$, $i_{w\_soll}$ gleicher Amplitude bereitsteht.

Prinzipiell muß die Phasenverschiebung zwischen den Ausgangssignalen des oder der Funktionsspeicherglieder F nicht 120° betragen. Zum Beispiel kann auch eine Phasenverschiebung um 90° vorgesehen sein, wodurch die gebildeten Winkelfunktionswerte dann die orthogonalen Komponenten eines betragsnomierten Vektors in einem runden Koordinatensystem darstellen. Aus diesem können durch Multiplikation mit dem vorgegebenen Stromsollwert $i_{soll}$ die Komponenten eines Strom-Sollwertvektors gebildet werden. Ein derartiger Vektor wird häufig zur vollständigen Beschreibung eines Nullkomponenten freien Dreiphasensystemes verwendet, wobei die einzelnen Wechselstromsollwerte $i_{u\_soll}$, $i_{v\_soll}$ und $i_{w\_soll}$ als Projektionen des Vektors auf drei gegeneinander räumlich um 120° gedrehte Achsen gebildet werden. Diese werden häufig mittels eines sogenannten "Zwei/Drei-Koordinatenwandlers" berechnet.

Das im vorangehenden geschilderte System von gegeneinander äquidistant phasenverschobenen Wechselstromsollwerten $i_{u\_soll}$, $i_{v\_soll}$ und $i_{w\_soll}$ wird für jede Phase einer Regelvergleichsstufe RV zugeleitet, welcher eingangsseitig ebenfalls ein analoges Istwertsystem der Wechselströme $i_{u\_ist}$, $i_{v\_ist}$ und $i_{w\_ist}$ zugeführt wird. Die entsprechenden Wechselstromistwerte werden über Wechselstrommeßglieder erfaßt. Dabei kann man sich wiederum die Tatsache zunutze machen, daß sich eine Netzphase aus den beiden anderen Netzphasen entsprechend den beiden im vorangehenden dargestellten Berechnungsvorschriften rekonstruieren läßt. Ein solcher dritter Wechselstromistwert, beispielsweise $i_{w\_ist}$, wird analog wie in dem Rechenglied R mittels eines zweiten Rechengliedes R2 ermittelt. Am Ausgang der genannten Regelvergleichsstufen RW steht für jede Phase ein phasenbezogener Differenzwert bereit, welcher als analoges Referenzsignal für jede Phase U, V, W zur Ansteuerung eines für jede Phase getrennt vorgesehenen unterlagerten Stromreglers Iru, Irv, IRw dient.

Jeder dieser genannten Stromregler Iru, Irv, IRw dient zur Erzeugung von jeweiligen Ansteuerimpulsen IMPu, IMPv, IPMw für die an die entsprechende Phase des wechselstromseitigen Anschlusses angeschlossenen Stromrichterventile des Umrichters UM. Somit werden die drei Phasen U, V, W getrennt voneinander geregelt. Für die Realisierung der jeweils unterlagerten Stromregler IRu, IRv, IRw sind zwei Möglichkeiten von Vorteil.

Zum einen können die genannten Stromregler als Pulsweitenmodulation-Stromregler PWM ausgelegt sein. Bei solchen Pulsweitenmodulations-Reglern wird eine konstante Frequenz vorgegeben. Die Stromwelligkeit ist innerhalb einer Periode der Netzphase nicht konstant. Sie nimmt im Bereich der Nulldurchgänge zu. Im Frequenzbereich zeigt sich in diesem Fall, daß die Taktfrequenz und deren Vielfache deutlich hervortreten.

Mit wesentlich geringerem Aufwand lassen sich die unterlagerten Stromregler als Hysteresestromregler realisieren. Dabei wird ein Toleranzband - die Hysterese - als endlicher Wert fest vorgegeben. Variabel ist in diesem Fall die Frequenz. Sie nimmt im Bereich der Spannungsnulldurchgänge zu. Genau dies stellt jedoch einen enormen Vorteil dar. Da die Spannungs- und Stromnullduchgänge phasengleich sind (Synchronität), bleiben die Schaltverluste trotz hoher Frequenz in diesem Bereich minimal. Im Falle eines als Hystereseregler ausgeprägten unterlagerten Stromreglers IRu,IRv, IRw werden die Stromrichterventile (der besseren Übersichtlichkeit halber nicht gezeigt) stets dann umgeschaltet, wenn sich der zugehörige Stromistwert dieser Phase vom zugehörigen Stromsollwert um mehr als die vorgegebene Hysteresebreite unterscheidet. Dadurch entsteht eine Zweipunktregelung des Stromes für jede Phase U,V,W, der sich somit praktisch stets innerhalb eines vorgegebenen Toleranzbandes um den Sollwert bewegt. Der Differenzbereich tritt anstelle der Taktfrequenz und deren Oberwellen als geringfügig angehobenes Rauschband auf, welches jedoch im Hinblick auf die Grenzwerte bei als Pulsweitenmodulations-Stromregler ausgelegten unterlagerten Stromreglern um Größenordnungen niedriger bleibt.

Um die bereits in der Einleitung angesprochene Gefahr zu umgehen, daß beim Ausfallen mindestens einer Phase die Regelungsanordnung in Mittkopplung geht, wodurch die Stromrichterventile, welche beispielsweise als sogenannte IGBT-Transistoren (IGBT = Insulated Gate Bipolar Transistor) ausgeprägt sind, zerstört werden können, ist die in der Darstellung gemäß FIG 1 gezeigte Regelungsanordnung gemäß der vorliegenden Erfindung um Schaltungsmaßnahmen erweitert, welche dies verhindern. Dazu ist eine Vergleicherstufe VG vorgesehen, welche bei Ausfall mindestens einer Netzphase U,V,W oder aber bei unerwünschten Phasenschwankungen ein Sperrsignal SP erzeugt, mit welchem die Ansteuerimpulse IMPu, IMPv und IMPw für die Stromrichterventile gesperrt werden. Das Sperren kann beispielsweise über einen Transistor, einen Schütz oder ein beliebiges anderes Schaltmittel erfolgen. Der Vergleicherstufe VG werden die ausgangsseitig am Phasendetektor PD bereitgestellten digitalen Vorzeichensignale σ(Uw), σ(Uv), σ(Uu) sowie die durch das oder die Funktionsspeicherglieder F bereitgestellten das jeweilige Vorzeichen der Winkelfunktionswerte darstellenden digitalen Signale F(Uu), F(Uw) zugeführt. So wird ein Vergleich zwischen dem aus dem oder den Funktionsspeichergliedern F ausgelesenen Vorzeichen F(Uu) bzw. F(Uw) ermöglicht.

Im Falle des Ausführungsbeispieles, in dem lediglich für zwei Netzphasen U, V entsprechende Winkelfunktionswerte sowie dazugehörige das jeweilige Vorzeichen der Winkelfunktionswerte darstellende digitale Signale in dem oder den Funktionsspeichergliedern F hinterlegt sind, wird lediglich für die beiden genannten Phasen ein Vergleich zwischen den aus dem oder den Funktionsspeichergliedern F ausgelesenen und den über den Phasendetektor PD gemessenen Vorzeichen vorgenommen. Dies geschieht über entsprechende Vergleichsbausteine "= 1", welche ausgangsseitig bei Übereinstimmung ein digitales Signal "1" bzw. High bereitstellen. Die nicht in dem oder den Funktionsspeichergliedern F hinterlegte Phase W, welche zur Ansteuerung des Phasenregelkreises PLL dient, wird durch den Phasenregelkreis durchgeschleift und ebenfalls zur Vergleicherstufe VG geführt. Die Ausgangssignale der Vergleicher "=1" sowie das letztgenannte gemessene digitale Vorzeichensignal der Phase W werden an ein negierendes UND-Gatter NAND geführt, welches ausgangsseitig das bereits erwähnte Sperrsignal SP bereitstellt. In der Darstellung gemäß FIG 1 ist dieses Sperrsignal an den Umrichter UM geführt, in welchem die bereits erwähnten Stromrichterventile angeordnet sind.

Eine zusätzliche Verbesserung ergibt sich, indem hinter dem Ausgang der Vergleicherstufe VG ein Impulsverlängerungsglied IG mit vorgebbarer Impulsverlängerungszeit geschaltet wird. Dadurch kann eine Toleranz bei Phasenschwankungen eingestellt werden, welche noch nicht zu einem Sperren der Stromrichterventile führen soll. So ist beispielsweise vorgebbar, daß eine Phasenverschiebung von 10° erlaubt ist, indem ein durch diese Phasenverschiebung herbeigeführtes kurzes "1"-Signal am Ausgang der Vergleicherstufe VG durch das Impulsverlängerungsglied IG unterdrückt wird. Die Impulsverlängerungszeit kann dabei so bemessen werden, daß die Impulsverlängerung genau das bei einer maximalen Phasenverschiebung von 10° auftretende Einsignal unterdrückt. Somit ist durch das Impulsverlängerungsglied IG eine Toleranz bei Phasenschwankungen fest vorgebbar, wodurch verhindert wird, daß die Stromrichterventile auch bei geringen Phasenschwankungen gesperrt werden. Ein Ausfall mindestens einer der Phasen U, V, W jedoch führt trotz des Impulsverlängerungsgliedes dazu, daß das Sperrsignal SP den Zustand "1" bzw. High einnimmt und über das entsprechende Schaltmittel die Ansteuerimpulse für die Stromrichterventile sperrt.

Bei den bisherigen Erläuterungen wurde stets von einer festen Zuordnung zwischen der Phasenlage des Drehstromnetzes und des Inhaltes des oder der Funktionsspeicherglieder F (Winkelfunktionswerte und zugehöriges Vorzeichen) ausgegangen. Bei einer Änderung der Phasenreihenfolge stimmt dies jedoch nicht mehr. Um auch in einem solchen Fall einen sicheren Betrieb der Regelungsanordnung gemäß der vorliegenden Erfindung zu ermöglichen, können Winkelfunktionswerte sowie das jeweilige Vorzeichen der Winkelfunktionswerte darstellende digitale Signale für mehrere Zuordnungen zur Phasenlage des Drehstromnetzes in dem oder den Funktionsspeichergliedern F für die entsprechenden Netzphasen hinterlegt werden. Mit Hilfe einer Rechts-/Linksdrehfelderkennung kann dann die benötigte Zuordnung über den entsprechenden Speicherbereich mittels des binären Adressignales ADR eingestellt werden.

Denkbar ist darüber hinaus auch eine Anwendung der Regelungsanordnung gemäß der vorliegenden Erfindung in abgeänderter Form im Bereich von Kompensationsanlagen, indem dadurch eine auftretende Blindleistung verhindert wird. Dies kann beispielsweise dadurch erreicht werden, indem die Phasenlage der einzelnen Drehstromphasen U, V, W über einen Phasendetektor PD am Fabrikeingang ermittelt wird, so daß entsprechende digitale Vorzeichensignale σ bereitgestellt werden, die die Phasenlage am Fabrikeingang beschreiben. Durch diese kann dann beispielsweise ein Addierer angesteuert werden, welcher nach dem oder den Funktionsspeichergliedern angeordnet ist.

**Patentansprüche**

1.  Regelungsanordnung zur Ein-/Rückspeisung von Energie aus einem Drehstromnetz in einen Umrichter (UM) mit Spannungszwischenkreis mit folgenden Merkmalen:

    1.1 ein Phasendetektor (PD), welcher für jede Phase (U,V,W) das aktuelle Vorzeichen (σ(Uw), σ(Uv), σ(Uu)) der entsprechenden Phase (U,V,W) als digitales Signal bereitstellt,
    1.2 ein Phasenregelkreis (PLL) zur Erzeugung eines auf die erfaßte Phasenlage synchronisierten binären Adressignales (ADR), welcher von einem der das aktuelle Vorzeichen ($\sigma$(Uw), $\sigma$(Uv),$\sigma$(Uu)) der entsprechenden Phase (U,V, W) bereitstellenden digitalen Signale ansteuerbar ist,

1.3 einem Funktionsspeicherglied (F), welches durch das binäre Adressignal (ADR) ansteuerbar ist, zur Erzeugung von mindestens zwei phasenrichtigen digitalen voneinander phasenverschobenen Winkelfunktionswerten (SIN ($\varphi$u), SIN(($\varphi$v)) sowie von dazugehörigen das jeweilige Vorzeichen der Winkelfunktionswerte darstellenden digitalen Signalen (F(Uu),F (Uv)),

1.4 mindestens zwei Digital/Analog-Umsetzerstufen, welche eingangsseitig mit den jeweiligen digitalen Winkelfunktionswerten (SIN($\varphi$u), SIN($\varphi$v)) beaufschlagbar sind,

1.5 mindestens zwei Multiplikatorstufen (M), durch welche die eingangsseitig anstehenden analogen Winkelwerte mit einem vorgebbaren Stromsollwert ($i_{soll}$) gewichtbar sind, zur Erzeugung eines Systems von phasenrichtigen analogen, gegeneinander phasenverschobenen Wechselstromsollwerten ($i_{u\_soll}$, $i_{v\_soll}$, $i_{w\_soll}$) gleicher Amplitude,

1.6 einer Regelvergleichstufe (RV), welcher das analoge Wechselstromsollwert-System ($i_{u\_soll}$, $i_{v\_soll}$, $i_{w\_soll}$) und ein durch Wechselstrommeßglieder erfaßbares analoges Wechselstromistwert-System ($i_{u\_ist}$, $i_{v\_ist}$, $i_{w\_ist}$) zur Bildung von phasenbezogenen Differenzwerten zuführbar ist, zur Erzeugung eines analogen Referenzsignales für jede Phase (U,V,W) aus dem jeweils zugehörigen Differenzwert,

1.7 für jede Phase (U,V,W) ein durch das jeweilige Referenzsignal dieser Phase ansteuerbarer Stromregler (IRu, IRv, IRw) zur Erzeugung von jeweiligen Ansteuerimpulsen (IMPu, IMPv, IMPw) für an die entsprechende Phase des wechselstromseitigen Anschlusses angeschlossene Stromrichterventile,

1.8 einer Vergleicherstufe (VG) zur Erzeugung eines Sperrsignales (SP) zum Sperren der Ansteuerimpulse (IMPu, IMPv,IMPw) für die Stromrichterventile für den Fall, daß mindestens ein vom Phasendetektor (PD) bereitgestelltes, das aktuelle Vorzeichen ($\sigma$(Uw),$\sigma$(Uv), $\sigma$(Uu)) einer Phase (U,V,W) darstellendes digitales Signal von dem entsprechenden vom Funktionsspeicherglied (F) bereitgestellten das jeweilige Vorzeichen der Winkelfunktionswerte darstellenden digitalen Signal (F(Uu),F (Uv)) abweicht.

**2.** Regelungsanordnung nach Anspruch 1, mit folgendem weiteren Merkmal:
2.1 ein mit einer Differenz aus einem vorgegebenen Spannungssollwert ($u_{soll}$) und einem rückgeführten Spannungsistwert ($u_{ist}$) beaufschlagbarer Spannungsregler (PI) zur Erzeugung des Stromsollwertes ($i_{soll}$), wobei der Spannungsregler als proportionaler Regler mit integralem Verhalten ausgelegt ist.

**3.** Regelungsanordnung nach Anspruch 1 oder 2, mit folgendem weiteren Merkmal:
3.1 jeder Stromregler (IRu, IRv, IRw) für jede Phase ist als Hystereseregler mit vorgebbarer, endlicher Hysteresebreite ausgelegt.

**4.** Regelungsanordnung nach Anspruch 1 oder 2, mit folgendem weiteren Merkmal:
4.1 jeder Stromregler (IRu,IRv,IRw) für jede Phase ist als Pulsweitenmodulationsregler mit vorgebbarer konstanter Frequenz ausgelegt.

**5.** Regelungsanordnung nach einem der vorangehenden Ansprüche, mit folgendem weiteren Merkmal:
5.1 einem Rechenmittel (R) zur Erzeugung eines dritten phasenrichtigen Wechselstromsollwertes ($i_{u\_soll}$, $i_{v\_soll}$, $i_{w\_soll}$) aus lediglich zweien von den über das Funktionsspeicherglied (F), die Digital/Analog-Umsetzerstufen und die Multiplikatorstufen (M) bereitgestellten phasenrichtigen analogen, gegeneinander phasenverschobenen Wechselstromsollwerten ($i_{u\_soll}$, $i_{v\_soll}$, $i_{w\_soll}$) gleicher Amplitude.

**6.** Regelungsanordnung nach einem der vorangehenden Ansprüche, mit folgendem weiteren Merkmal:
6.1 einem Impulsverlängerungsglied (IG) mit vorgebbarer Verlängerungszeit zur Verlängerung des Sperrsignales (SP).

**7.** Regelungsanordnung nach einem der vorangehenden Ansprüche, mit folgendem weiteren Merkmal:
7.1 es sind Winkelfunktionswerte (SIN($\varphi$u),SIN ($\varphi$v)) sowie das jeweilige Vorzeichen der Winkelfunktionswerte darstellende digitale Signale (F(Uu), F(Uv)) für mehrere Zuordnungen zur Phasenlage des Drehstromnetzes in dem Funktionsspeicherglied (F) hinterlegt, wobei der entsprechende Speicherbereich für jede Zuordnung über das Adreßsignal (ADR) entsprechend einer Rechts-/Linksdrehfelderkennung einstellbar ist.

**Claims**

**1.** Feedback control arrangement for supply/recovery of energy from a three-phase mains supply system in a converter (UM) with a voltage link, with the following features:

1.1 a phase detector (PD), which for each phase (U, V, W), produces the current sign ($\sigma$

(Uw), σ(Uv), σ(Uu)) of the corresponding phase (U, V, W) as a digital signal,

1.2 a phase-locked loop (PLL) to generate an address signal (ADR) synchronised to the detected phase angle, which can be controlled from one of the digital signals producing the current sign (σ(Uw), σ(Uv), σ(Uu)) of the corresponding phase (U, V, W),

1.3 a function storage element (F) which can be controlled by the binary address signal (ADR) for generation of at least two in-phase digital trigonometric function values SIN($\varphi$u), SIN($\varphi$v)), which are out of phase relative to each other, as well as by associated digital signals (F(Uu), F(Uv)) representing the particular sign of the trigonometric function values,

1.4 at least two digital/analogue converter stages, to the input side of which the particular digital trigonometric function values (SIN($\varphi$u), SIN($\varphi$v)) can be applied,

1.5 at least two multiplier stages (M) by means of which the analogue phase angle values at the input can be weighted by a defined current set value ($I_{soll}$), to generate a system of in-phase analogue a.c. set values ($i_{u\_soll}$, $i_{v\_soll}$, $i_{w\_soll}$) which are of the same amplitude but out of phase relative to each other,

1.6 a control comparison stage (RV) to which the analogue a.c. set value system ($i_{u\_soll}$, $i_{v\_soll}$, $i_{w\_soll}$) and an analogue a.c. actual value system ($i_{u\_ist}$, $i_{v\_ist}$, $i_{w\_ist}$) for formation of phase-related differential values can be applied, for generation of an analogue reference signal for each phase (U, V, W) from the particular associated differential value,

1.7 for each phase (U, V, W), a current controller (IRu, IRv, IRW) which can be controlled by the particular reference signal of this phase, for generation of the particular control pulses (IMPu, IMPv, IMPw) for the power converter valves connected to the corresponding phase of the a. c. side terminal,

1.8 a comparator stage (VG) for generation of a blocking signal (SP) for blocking the control pulses (IMPu, IMPv, IMPw) for the power converter valves in the event of at least one of the digital signals produced by the phase detector (PD) and representing the current sign (σ(Uw), σ(Uv), σ(Uu)) of a phase (U, V, W) deviating from the corresponding digital signal (F(Uu), F(Uv)) produced by the function storage element(s) (F) representing the particular sign of the trigonometric function values.

2. Feedback control arrangement in accordance with claim 1, with the following further feature:
2.1 a voltage regulator (P1) to which can be applied the difference between a defined voltage set value ($U_{soll}$) and a fed-back voltage actual value ($U_{ist}$), for generation of the current set value ($i_{soll}$), whereby the voltage regulator is designed as an integral action proportional controller.

3. Feedback control arrangement in accordance with claim 1 or 2, with the following further feature:
3.1 each current controller (IRu, IRv, IRw) for each phase is designed as a hysteresis controller with a definable finite hysteresis band.

4. Feedback control arrangement in accordance with claims 1 or 2, with the following further feature:
4.1 each current controller (IRu, IRv, IRw) for each phase is designed as a pulse-width modulation controller with a definable constant frequency.

5. Feedback control arrangement in accordance with one of the preceding claims, with the following further feature:
5.1 a computing element (R) to generate a third in-phase a.c. set value ($i_{u\_soll}$, $i_{v\_soll}$, $i_{w\_soll}$) from only two of the in-phase, analogue a.c. set values ($i_{u\_soll}$, $i_{v\_soll}$, $i_{w\_soll}$) of the same amplitude and out of phase relative to each other, produced by the function storage element(s) (F), digital/analogue converter stages and the multiplier stages (M).

6. Feedback control arrangement in accordance with one of the preceding claims, with the following further feature:
6.1 a pulse stretching element (IG) with a definable stretch time to extend the blocking signal (SP).

7. Feedback control arrangement in accordance with one of the preceding claims, with the following further feature:
7.1 trigonometric function values (SIN($\varphi$u), SIN($\varphi$v)) and the digital signals (F(Uu), F(Uv)) representing the particular sign of the trigonometric function values for several assignments of the phase angle of the three-phase mains supply are stored in the function storage element (F), whereby it is possible to set the corresponding storage area for each assignment by means of the address signal (ADR) corresponding to a clockwise/counterclockwise phase sequence detection.

## Revendications

1. Dispositif de régulation pour l'alimentation/récupération d'énergie à partir d'un réseau à courant triphasé dans un convertisseur (UM) à circuit intermédiaire de tension, comportant les caractéristiques suivantes :

   1.1 un détecteur (PD) de phases qui met à disposition pour chaque phase (U, V, W) le signe ($\sigma$ (Uw), $\sigma$(Uv), $\sigma$(Uu)) instantané de la phase correspondante comme signal numérique,

   1.2 un circuit (PLL) de régulation de phase pour produire un signal (ADR) d'adressage binaire, synchronisé à la position des phases détectée, qui peut être commandé par l'un des signaux numériques mettant à disposition le signe ($\sigma$ (Uw), $\sigma$(Uv), $\sigma$(Uu)) instantané de la phase (U, V, W) correspondante.

   1.3 un élément (F) de mémorisation fonctionnel qui peut être commandé par le signal (ADR) d'adressage binaire, pour produire au moins deux valeurs (SIN ($\phi$u), SIN ($\phi$v)) fonctionnelles angulaires numériques, dont la phase est correcte, qui sont déphasées l'une par rapport à l'autre, ainsi que pour produire des signaux (F (Uu), F (Uv) numériques, qui leur sont associés, qui représentent le signe associé des valeurs fonctionnelles angulaires,

   1.4 au moins deux étages convertisseurs numériques/analogiques qui peuvent être alimentés côté entrée en les valeurs (SIN ($\phi$u), SIN ($\phi$v)) fonctionnelies angulaires numériques associées,

   1.5 au moins deux étages (M) multiplicateurs par lesquels les valeurs angulaires analogiques s'appliquant côté entrée peuvent être pondérées par une valeur ($i_{soll}$) de consigne du courant pouvant être prescrite, pour produire un système de valeurs ($i_{u-soll}$, $i_{v-soll}$, $i_{w-soll}$) de même amplitude du courant alternatif, analogiques, dont la phase est correcte, et qui sont déphasées les unes par rapport aux autres,

   1.6 un étage (RV) comparateur de régulation auquel peuvent être envoyés le système ($i_{u-soll}$, $i_{v-soll}$, $i_{w-soll}$) de valeurs analogiques de consigne du courant alternatif et un système ($i_{u-ist}$, $i_{v-ist}$, $i_{w-ist}$) de valeurs analogiques réelles du courant alternatif, pouvant être détecté par des éléments de mesure du courant alternatif, pour former des valeurs de différences relatives aux phases, pour produire un signal de référence analogique pour chaque phase (U. V. W) à partir de la valeur de différence associée.

   1.7 pour chaque phase (U. V, W), un régulateur (IRu, IRv, IRw) de courant pouvant être commandé par le signal de référence associé de cette phase, pour produire des impulsions (IMPu, IMPv, IMPw) de commande associées pour les valves de convertisseur raccordées à la phase correspondante de la borne située côté courant alternatif,

   1.8 un étage (VG) comparateur pour produire un signal (SP) de blocage pour bloquer les impulsions (IMPu, IMPv, IMPw) de commande pour les valves de convertisseur, dans le cas où au moins un signal numérique mis à disposition par le détecteur (PD) de phases, représentant le signe ($\sigma$ (Uw), $\sigma$(Uv), $\sigma$(Uu)) instantané d'une phase (U, V. W), s'écarte du signal (F (Uu), F (Uv)) numérique correspondant, mis à disposition par l'élément (F) de mémorisation fonctionnel, représentant le signe associé de valeurs fonctionnelles angulaires.

2. Dispositif de régulation suivant la revendication 1, comportant la caractéristique supplémentaire suivante :

   2.1 un régulateur (PI) de tension pouvant être alimenté en une différence entre une valeur ($U_{soll}$) de consigne de tension prescrite et une valeur ($U_{ist}$) réelle de tension renvoyée, pour produire la valeur ($i_{soll}$) de consigne du courant, le régulateur de tension étant conçu en régulateur proportionnel à comportement intégral.

3. Dispositif de régulation suivant la revendication 1 ou 2, comportant la caractéristique supplémentaire :

   3.1 chaque régulateur (IRu, IRv, IRw) de courant est conçu pour chaque phase comme régulateur d'hystérésis à largeur d'hystérésis finie pouvant être prescrite.

4. Dispositif de régulation suivant la revendication 1 ou 2, comportant la caractéristique supplémentaire suivante :

   4.1 chaque régulateur (IRu, IRv, IRw) de courant est conçu pour chaque phase comme régulateur de modulation en largeur d'impulsion à fréquence constante pouvant être prescrite.

5. Dispositif de régulation suivant l'une des revendications précédentes, comportant la caractéristique supplémentaire suivante :

   5.1 un moyen (R) de calcul pour produire une troisième valeur ($i_{u-soll}$, $i_{v-soll}$, $i_{w-soll}$) de courant alternatif dont la phase est correcte à partir de seulement deux des valeurs ($i_{u-soll}$, $i_{v-soll}$, $i_{w-soll}$) de consigne du courant alternatif de même amplitude, qui sont mises à disposition par l'Intermédiaire de l'élément (F) de mémorisation fonctionnel, des étages convertisseurs numériques/analogiques et des étages (M) multiplicateurs, qui sont correctes en phase. analogiques et déphasées l'une par rapport à l'autre.

**EP 0 956 639 B1**

**6.** Dispositif de régulation suivant l'une des revendications précédentes, comportant la caractéristique supplémentaire suivante :

6.1 un élément (IG) d'étalement d'impulsions à durée d'étalement pouvant être prescrite pour étaler le signal (SP) de blocage.

**7.** Dispositif de régulation suivant l'une des revendications précédentes, comportant la disposition supplémentaire suivante :

7.1 il est mis en mémoire dans l'élément (F) de mémorisation fonctionnel des valeurs (SIN ($\phi$u), SIN ($\phi$v)) fonctionnelles angulaires ainsi que des signaux (F (Uu), F (Uv)), numériques représentant le signe associé des valeurs fonctionnelles angulaires, pour plusieurs associations à la position de phases du réseau à courant triphasé, la zone de mémoire correspondante pouvant être réglée pour chaque association par l'intermédiaire du signal (ADR) d'adressage suivant une reconnaissance de champ magnétique rotatif droite/gauche.